# EUROPEAN PATENT SPECIFICATION

(11) **EP 1 922 691 B1**
(45) Date of publication and mention of the grant of the patent: **07.08.2024**
(21) Application number: 06801071.9
(22) Date of filing: 09.08.2006
(51) Int. Cl.: G06Q 20/12, G06Q 20/38, G06Q 20/40, G06Q 30/06

(54) **WEB TERMINAL AND BRIDGE THAT SUPPORT PASSING OF AUTHENTICATION DATA TO ACQUIRER FOR PAYMENT PROCESSING**
WEB-ENDGERÄT UND BRÜCKE ZUR UNTERSTÜTZUNG DES WEITERLEITENS VON AUTHENTIFIZIERUNGSDATEN ZU DEM BESCHAFFER FÜR DIE BEZAHLUNGSVERARBEITUNG
TERMINAL WEB ET PASSERELLE QUI PREND EN CHARGE LE PASSAGE DE DONNEES D'AUTHENTIFICATION A UN ACQUEREUR POUR LE TRAITEMENT DES PAIEMENTS

(30) Priority: 09.08.2005 US 70673805 P
(43) Date of publication of application: 21.05.2008
(73) Proprietor: CardinalCommerce Corporation, Mentor, OH 44060 (US)
(72) Inventor: KERESMAN, Michael A., III, Kirtland Hills, OH 44060 (US); BALASUBRAMANIAN, Chandra, Lakewood, OH 44107 (US)
(74) Representative: Meissner Bolte Partnerschaft mbB
(86) International application number: PCT/US2006/031090
(87) International publication number: WO 2007/053223

(56) References cited:
- US-A1- 2002 065 839
- US-A1- 2003 056 092
- US-A1- 2004 260 657
- US-B1- 6 233 565
- No further relevant documents disclosed

## Description

This application claims the benefit of U.S. Provisional Application No. 60/706,738, filed August 09, 2005.

### FIELD

The present inventive subject matter relates to the art of identity authentication. It finds particular application in conjunction with supporting cardholder authentication for payment processing of Internet based commercial transactions (i.e., electronic commerce), and it will be described with particular reference thereto. However, one of ordinary skill in the art will appreciate that it is also amenable to other like applications.

### BACKGROUND

Internet commerce, or e-commerce as it is otherwise known, relates to the buying and selling of products and services between consumers and merchants over the Internet or other like transactional exchanges of information. The convenience of shopping over the Internet has sparked considerable interest in e-commerce on behalf of both consumers and merchants. Internet sales, or like transactions, have been typically carried out using standard credit cards such as Visa^{®}, MasterCard^{®}, Discover^{®}, American Express^{®}, or the like, or standard debit cards, i.e., check cards or automated teller machine (ATM) cards which directly access funds from an associated deposit account or other bank account.

While widely used for more traditional face-to-face transactions, use of these standard cards in connection with e-commerce presents certain difficulties, including difficulties concerning authentication or positive identification of the cardholder. For example, maintaining consumer confidence in security has become difficult with increased reports of fraud. The resulting apprehension is also fueled by consumer uncertainty of the reputation or integrity of a merchant with whom the consumer is dealing. Questionable security of the consumer's card information or other personal information typically submitted along with a traditional e-commerce transaction (e.g., address, card number, phone number, etc.) serves to increase apprehension even more. Additionally, cardholders, merchants and financial institutions are all concerned about safeguarding against fraudulent or otherwise unauthorized transactions.

Accordingly, various credit card or payment networks have implemented initiatives or programs aimed at safeguarding against fraud. Payment networks (e.g., Visa^{®} and MasterCard^{®}) have implemented various initiatives (e.g., Visa 3-D Secure^{®}, a.k.a. Verified by Visa^{®} (VbV), and MasterCard^{®} SecureCode^{™}) to allow for the authentication of a cardholder prior to authorizing a transaction. For example, some of these authentication initiatives work by having a cardholder connect to the card issuing bank for authentication. The cardholder authenticates with the bank by connecting to a server over the Internet that stores authentication credentials for that cardholder, whether it be a password, public key infrastructure (PKI) credential, biometric credential, or some other credential. The bank then sends an authentication message or data (based on success or failure) back to the merchant. Often, this is all carried out over the Internet. The benefits of such authentication protocols to all the parties involved in the transaction have been acknowledged.

However, many merchants and others are still not suitably equipped to properly comply with the authentication initiatives. For example, many on-line or Internet merchants (as well as other types of merchants, e.g., mobile merchants, so called brick and mortar merchants, etc.) employ back-end accounting and/or order managements systems which are commonly used to pass or transmit card transactions to acquirers, e.g., merchant banks, payment processing gateways, or the like. On behalf of the merchant, the acquirer then presents or submits the transactions over the appropriate payment network in the usual manner to the card issuing banks or the like for payment. For the merchant to enjoy the full advantage of the benefits of the various authentication initiatives, commonly, the aforementioned authentication data has to accompany the transactions submitted over the payment network. Nevertheless, many back-end accounting and/or order management systems currently used by merchants are not equipped to properly pass the authentication data to the acquirer so that it may be submitted with the transaction for payment.

For example, insomuch as an OMS or the like may have been implemented or installed prior to adoption of the authentication protocols or initiatives, there may not be an extra place or field in which to store the authentication data along with the particular transaction associated therewith. That is to say, the OMS may have no means to receive and/or record the authentication data along with other associated transaction detail. Accordingly, the OMS simply has no authentication data to pass to the acquirer. One solution to this problem is for the merchant to upgrade or replace their OMS or back-end accounting system. This solution however can be costly and therefore undesirable.

Even if the OMS were originally provisioned with one or more extra fields to accommodate future growth and/or an expanded set of data values for each transaction, problems may still arise. For example, while the OMS can now accommodate receipt and/or recording of the authentication data along with the other transaction details, it may still not recognize the data as authentication data. When provisioning an OMS for future expansion, the nature of that expansion is not always appreciated or known at the time. Accordingly, any extra or expansion fields provisioned are often labeled as "miscellaneous" or with another such nondescript or generic label. That is to say, the OSM will generally have no particular way to identify the nature or particular type of data that is recorded or contained in these extra or spare fields. Accordingly, it may not be programmed or otherwise equipped to pass this field to the acquirer along with the other transaction details. Moreover, even if the data in the miscellaneous field is passed to the acquirer, being that the OMS does not recognize it as authentication data, it may not be formatted as a particular acquirer is expecting, it may not be passed in proper sequence to the acquirer (i.e., in the location expected by the particular acquirer relative to the other transaction details), or it may not be otherwise identifiable by the acquirer as authentication data. Accordingly, the acquirer may not accept the seemingly extraneous data or may not known what to do with it, in which case the authentication may still not be is not properly submitted with its associated transaction over the payment network.

Accordingly, a new and improved system and/or method that supports the passing of authentication data in conjunction with its associated transaction details for payment processing is disclosed that overcomes the above-referenced problems and others.

### BRIEF DESCRIPTION

In accordance with one exemplary embodiment, a method is provided for passing authentication data to a third party that processes a transaction. More specifically, in connection with a transaction conducted between a first party and a second party, wherein a plurality of transaction details related to the transaction are generated, including a transaction ID which identifies the transaction and authentication data which reflects a result of an attempt to authenticate the first party, the method includes: providing the second party a document over a communications network, the document requesting a transaction ID; receiving the transaction ID over the communications network from the second party; collecting the transaction details corresponding to the received transaction ID; identifying the authentication data within the collected transaction details; formatting the transaction details according to a prescribed format; and, forwarding the formatted transaction details to the third party.

In accordance with another exemplary embodiment, a system is provided for passing authentication data to a third party which processes a transaction. More specifically, in connection with a transaction conducted between a first party and a second party, wherein a plurality of transaction details related to the transaction are generated, including a transaction ID which identifies the transaction and authentication data which reflects a result of an attempt to authenticate the first party, the system includes: means for providing the second party a document over a communications network, the document requesting a transaction ID; means for receiving the transaction ID over the communications network from the second party; means for collecting the transaction details corresponding to the received transaction ID; means for identifying the authentication data within the collected transaction details; means for formatting the transaction details according to a prescribed format; and, means for forwarding the formatted transaction details to the third party.

In accordance with another exemplary embodiment, a method is provided for passing transaction details to a third party which processes the transaction. In connection with a transaction conducted between a first party and a second party, wherein a plurality of transaction details related to the transaction are generated, including a transaction ID which identifies the transaction, the method includes: providing the second party a document over a communications network, the document requesting a transaction ID; receiving the transaction ID over the communications network from the second party; collecting the transaction details corresponding to the received transaction ID; identifying the collected transaction details; formatting the transaction details according to a prescribed format; and, forwarding the formatted transaction details to the third party.

Numerous advantages and benefits of the inventive subject matter disclosed herein will become apparent to those of ordinary skill in the art upon reading and understanding the present specification.

### BRIEF DESCRIPTION OF THE DRAWINGS

The present inventive subject matter may take form in various components and arrangements of components, and in various steps and arrangements of steps. The drawings are only for purposes of illustrating preferred embodiments and are not to be construed as limiting. Further, it is to be appreciated that the drawings are not to scale.
FIGURE **1** is a diagrammatic illustration showing an on-line transaction processing system suitable for practicing aspects of the present inventive subject matter.
FIGURES **2A** and **2B** are diagrammatic illustrations of transaction records supported by an accounting/order management system and/or transaction database shown in FIGURE **1****.**
FIGURE **3** is a diagrammatic illustration showing an authentication bridge and web terminal embodying aspects of the present inventive subject matter.

### DETAILED DESCRIPTION

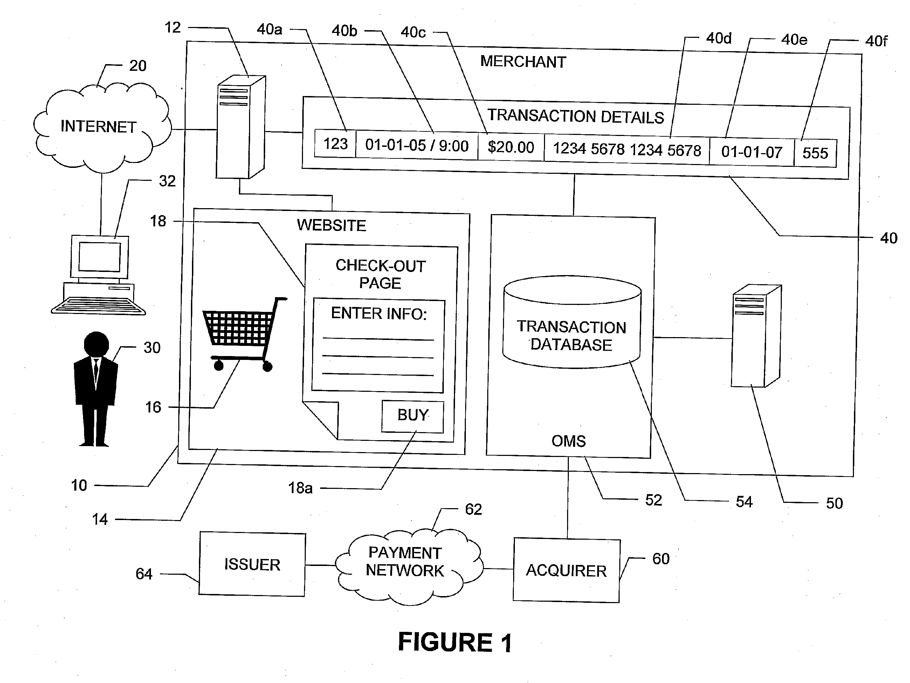

With reference to FIGURE **1****,** there is shown an on-line or Internet merchant **10** or other like entity or proxy therefor employing a web server **12** or other similar computer operatively connected to the Internet **20** or other like network to host a website **14** in the usual manner. A consumer or cardholder **30,** e.g., employing a web or Internet browser running on a computer **32** or other like Internet access device, selectively connects to the server **12** over the Internet **30** to access and/or shop at the hosted website **14.** Suitably, the server **12** provides or otherwise supports what is known as a shopping cart program or function **16** for the website **14.** Via the shopping cart **16,** the cardholder **30** selects various items to purchase, and then proceeds to the website's check-out webpage **18** or the like provided by the server **12.** At the check-out page **18,** the cardholder optionally provides their card information, address, etc., and selects a check-out or other similar purchase completing option **18a** provided on the page **18.** Upon completing the transaction, transaction data and/or details **40** are generated or otherwise established, e.g., by the server **12.** The transaction data **40** typically includes a plurality of data elements that represent the values for the various transaction details. For example, as illustrated, the transaction data **40** includes the following elements: a transaction reference number or ID **40a,** a transaction date and/or time **40b,** a transaction amount **40c,** a card number **40d,** a card expiration date **40e,** and an optional authentication result or data value **40f.**

Depending on the type of card transaction executed, the authentication result or data value **40f** may or may not be produced or otherwise established. For example, the cardholder **30** may opt to use a card otherwise accepted by the merchant **10** and/or website **14,** but the card is not part of a payment network having an authentication protocol or initiative supported by the website **14** or merchant **10.** For distinction purposes, transactions not having an associated authentication result or value **40f** are referred to herein as non-authenticated transactions, while transactions having an associated authentication result or value **40f** are referred to as authenticated transactions. Of course, even in an authenticated transaction, the actual result or value **40f** may represent a positive authentication (e.g., meaning the cardholder **30** passed the authentication process or otherwise had the proper credentials), a negative authentication (e.g., meaning the cardholder **30** did not provide the proper credentials during the authentication process), or a failed authentication (e.g., meaning authentication was attempted in accordance with the authentication protocol or initiative, but no result was achieved or obtained).

When established, the authentication result or data value **40f** is suitably obtained from and/or otherwise corresponds to an authentication message and/or data returned or otherwise transmitted to the server **12** and/or merchant **10** in accordance with an authentication protocol or initiative supported by a payment network to which the card used in the transaction belongs. For example, the authentication result or data value **40f** is optionally: (i) what is commonly known as an accountholder authentication value (AAV) or a universal cardholder authentication field (UCAF) value produced in connection with the so called MasterCard^{®} SecureCode^{™} initiative supported by the MasterCard^{®} payment network; (ii) what is commonly known as a cardholder authentication verification value (CAW) produced in connection with the so called VbV or 3-D Secure^{®} initiative supported by the Visa^{®} payment network; or, (iii) some other like value representative of a similar authentication determination or result. Optionally, the result or data value **40f** is encoded or encrypted.

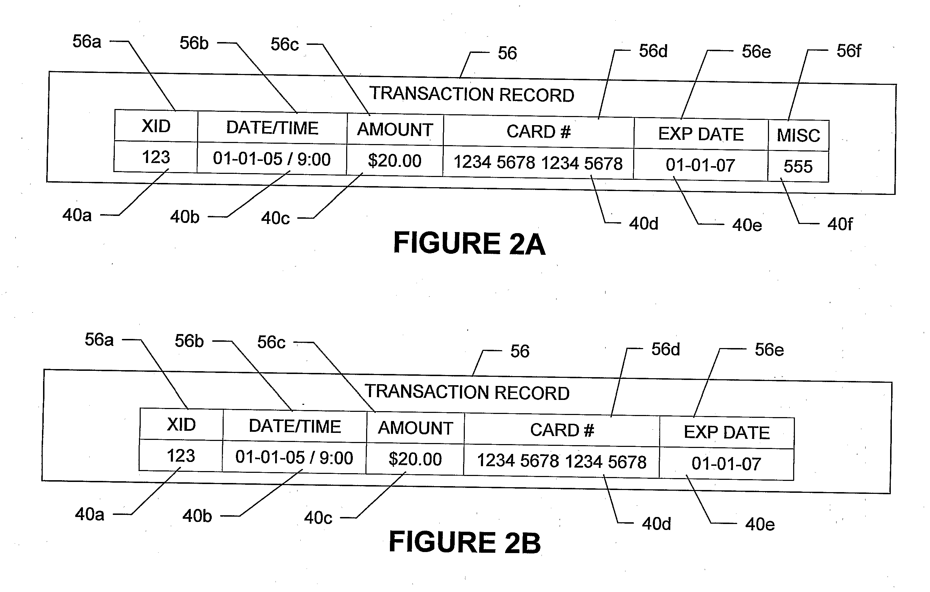

Suitably, the merchant **10** also employs a back-end accounting and/or order management system (OMS) **52,** e.g., supported and/or running on a separate server **50** or other like computer. The OMS **52** is suitably implemented via any appropriate accounting or order management platform. Commercially available options include Mail Order Manager^{®} provided by Dydacomp, Everest^{®} provided by iCode, Inc., etc. In the usual manner, the OMS **52** suitably includes and/or employs a transaction database (DB) **54** in which transaction records **56** are maintained (see also FIGURES **2A** and **2B**). As shown in FIGURES **2A** and **2B****,** each data record **56** includes a plurality of fields, including for example, a transaction reference number or ID field **56a,** a transaction date and/or time field **56b,** a transaction amount field **56c,** a card number field **56d,** and a card expiration date field **56e.** Optionally, as shown in FIGURE **2A****,** the OMS **52** and/or DB **54** are provisioned with and/or otherwise equipped to support a transaction record **56** with an additional or extra miscellaneous field **56f.**

Suitably, the transaction details **40** established by the server **12** for each transaction are transferred to or otherwise obtained by the OMS **52.** When the OMS **52** receives transaction data or details **40** for a particular transaction from the server **12,** they are mapped to the corresponding fields (as shown) in a transaction record **56** produced or created for that transaction in the DB **54.** As previously indicated, non-authenticated transactions have no authentication data present. Accordingly, if the record **56** employed by the OMS **52** is structured as shown in FIGURE **2A****,** then the miscellaneous field **56f** is simply left blank, otherwise if it is structured as shown in FIGURE **2B****,** then there is suitably a one-to-one mapping of the data elements **40a** through **40e** into the fields **56a** through **56e** as illustrated. Alternately, if the authentication data **40f** is present for the transaction and the record **56** employed by the OMS **52** is structured as shown in FIGURE **2A****,** then the authentication data is mapped to the miscellaneous field **56f,** otherwise if it is structured as shown in FIGURE **2B****,** then the data elements **40a** through **40e** are mapped into the fields **56a** through **56e** as illustrated, and the authentication data **40f** is dropped, not sent to, not recorded or otherwise disregarded by the OMS **52.**

Optionally, for non-authenticated transactions, the OMS **52** passes or otherwise delivers the transaction records **56** and/or the transaction details **40** contained therein to an acquirer **60** for payment processing. These records **56** may be passed to the acquirer periodically or at other intervals as desired, and they may be passed singularly or in batches. In the usual manner, the acquirer **60** (e.g., a merchant bank, a payment gateway, or the like) then presents or submits the transactions for payment over an appropriate payment network **62** to an issuer **64** (e.g., the bank or other like entity that issued the card used in the transaction). Suitably, the OMS server **50** and the acquirer **60** are both operatively connected to the Internet **20.** Accordingly, the transaction records **56** and/or the data **46** contained therein for non-authenticated transactions is optionally transmitted from the server **50** to the acquirer **60** over the Internet **20.**

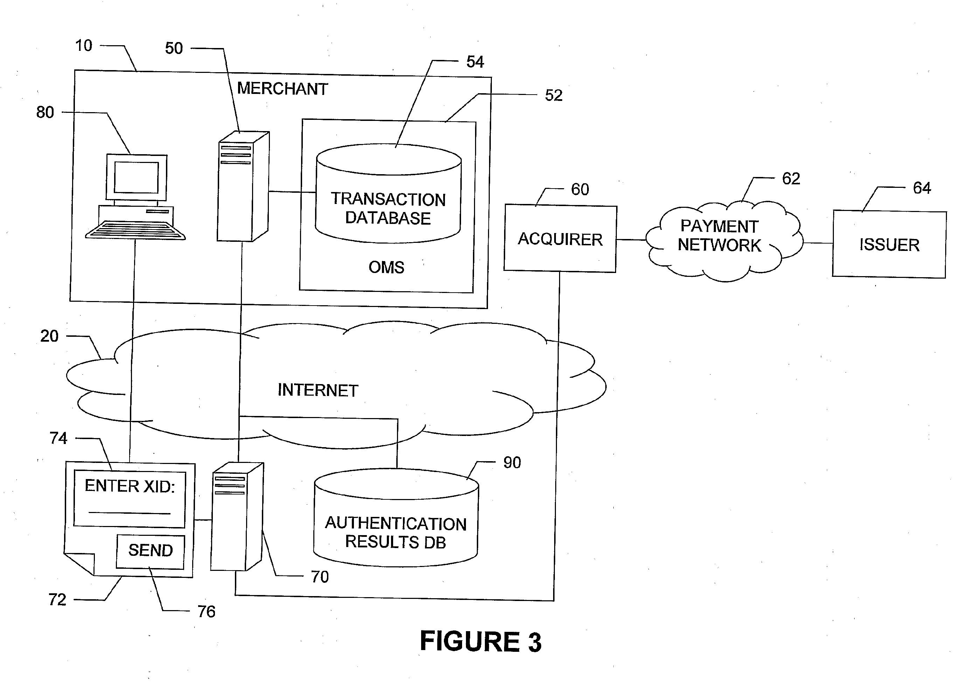

With reference to FIGURE **3****,** the merchant **10** suitably employs an authentication bridge, optionally operated by a third party, to pass authenticated transactions to the acquirer **60.** As shown, the authentication bridge is software or a set of instructions implemented via a server **70** or other like computer operatively connected to the Internet **20.** Suitably, the merchant **10** selectively accesses the authentication bridge with a web terminal **80** (e.g., implemented as a web or Internet browser running on a computer or other like Internet access device) by connecting to the bridge server **70** over the Internet **20.** Alternately, the authentication bridge and/or web terminal **80** are provisioned to automatically process all or some sub-set of the merchant's transactions, and if no relevant authentication data is found or present for a particular transaction, then the authentication bridge simply passes that transaction to the acquirer **60** in the usual manner, e.g., as the merchant **10** would otherwise normally provide it.

As shown, when the authentication bridge is accessed, the bridge server **70** supplies the web terminal **80** with an authentication bridge web page **72** or the like, including an area or field **74** for entering a transaction ID (XID) and a submit or send option **76.** Accordingly, the merchant **10,** via the web terminal **80,** manually or otherwise enters a transaction reference number (i.e., the XID value **40a** for an authenticated transaction previously completed) in the entry field **74** and selects the send option **76** to post the page **72** back to the bridge server **70** or otherwise deliver the XID value **40a** entered in the field **74** to the authentication bridge. While described with reference to a single authenticated transaction, optionally, a batch or plurality of authenticated transactions are processed together in similar fashion by entering a plurality or range of XID values **40a** in the field **74** and then selecting the send option **76.**

In a suitable embodiment where the OMS **52** and/or DB **54** support a record structure as shown in FIGURE **2A****,** the authentication bridge responds to receipt of the XID value **40a** by retrieving, obtaining or otherwise accessing the corresponding transaction record **56** (i.e., the record **56** with a matching XID value **40a** in its XID field **56a**) maintained in the transaction record DB **54,** for example, by connecting to the OMS server **50** with the bridge server **70** over the Internet **20.** Optionally, the authentication bridge is provisioned to recognize or know that the data in the miscellaneous field **56f** corresponds to the authentication data **40f.** Alternately, when the record **56** is obtained, the authentication bridge parses or otherwise scans the data values **40** to determine which one corresponds to the authentication data **40f,** for example, by examining the format, structure and/or values of the individual data elements to find the one that is compatible with or matches an accepted or prescribed format, structure and/or value for authentication data. Having identified the authentication data **40f,** the authentication bridge formats and/or orders the data **40** obtained from the retrieved record **56** (including the authentication data **40f**) to comply with the data format and/or sequence prescribed or otherwise expected by the acquirer **60.** The formatted and/or ordered data **40** is then passed or otherwise delivered to the acquirer **60,** e.g., by the bridge server **70** which connects to the acquirer **60** over the Internet **20** or alternately some form of dedicated connectivity. As before, the acquirer **60** then presents or submits the transactions for payment over the appropriate payment network **62** to the issuer **64,** this time with the authentication data **40f.** Accordingly, the merchant **10** enjoys the full benefit of participation in and/or compliance with the applicable authentication protocol or initiative. Optionally, the acquirer **60** returns a response from the payment processing to the authentication bridge and/or server **70,** which in turn optionally formats and forwards the same on to the merchant **10,** e.g., over the Internet **20** to the server **50,** so that the OMS **52** and/or DB **54** may be properly updated with the status of the transaction (e.g., indicating that payment processing for the transaction is complete and/or indicating a payment status, i.e., paid, denied, etc.).

In an alternate embodiment where the OMS **52** and/or DB **54** support a record structure as shown in FIGURE **2B****,** the authentication bridge cannot obtain the authentication data **40f** from the DB **54.** However, at times in the authentication process itself, the authentication data **40f** is optionally maintained by other parties involved in or facilitating the authentication process, e.g., in an authentication results database **90.** Suitably, the authentication results or data **40f** maintained in the DB **90** are also identified by their associated XID values **40a.** Accordingly, the authentication bridge responds to receipt of the XID value **40a** by retrieving, obtaining or otherwise accessing the corresponding authentication data **40f** maintained in the authentication DB **90,** for example, by connecting thereto with the server **70** over the Internet **20.** The other transaction details or data **40** are obtained from the DB **54** as before, or alternately, if available, from the DB **90.** In either case, now having a complete set of transaction details **40** (including the authentication data **40f**), the authentication bridge formats and/or orders the data **40** to comply with the data format and/or sequence prescribed or otherwise expected by the acquirer **60,** and the formatted and/or ordered data **40** is then passed or otherwise delivered to the acquirer **60,** e.g., by the bridge server **70** which connects to the acquirer **60** over the Internet **20.** As before, the acquirer **60** then presents or submits the transactions for payment over the appropriate payment network **62** to the issuer **64,** this time with the authentication data **40f.** Accordingly, the merchant **10** again enjoys the full benefit of participation in and/or compliance with the applicable authentication protocol or initiative. Optionally, the acquirer **60** returns a response from the payment processing to the authentication bridge and/or server **70,** which in turn optionally formats and forwards the same on to the merchant **10,** e.g., over the Internet **20** to the server **50,** so that the OMS **52** and/or DB **54** may be properly updated with the status of the transaction (e.g., indicating that payment processing for the transaction is complete and/or indicating a payment status, i.e., paid, denied, etc.).

In one suitable embodiment where the authentication bridge is not aware of the record structure employed by the OMS **52** and/or DB **54,** the authentication bridge is provisioned to check the DB **54** for the authentication data **40f,** and if it cannot be found there alternately check the DB **90.**

While described herein with reference to an on-line or Internet merchant such as the merchant **10,** alternately, other types of merchants (e.g., a mobile merchant (e.g., selling goods and/or service over a wireless telecommunications network), a traditional brick and mortal merchant, etc.) can also beneficially implement and/or utilize a back-end transaction processing system similar to the one described herein. That is to say, suitably, any of a variety of front-end platforms or approaches may be optionally used to generate the transactions (i.e., in person transactions, e-commerce transactions, mobile transactions, etc.), while a similar back-end processing as described herein is still used or otherwise implemented in the manner described.

Additionally, it is to be appreciated that the web terminal and/or bridge may be employed to enable the merchant to accept alternate payment methods (e.g., PayPal^{®}, Bill Me Later^{®}, Secure eBill, Google Checkout, NACHA, etc.) and submit the transaction details to the appropriate payment processing network or entity. That is to say, in some instances the merchant's OMS or other back-end processing may not be equipped or otherwise setup to handle the transaction details associated with one or more alternate payment methods. For example, fields may not be designated or available for the various different types of data elements associated with a transaction conducted using the alternate payment method. Accordingly, the web terminal is used to submit a transaction to the bridge which collects the transaction details, identifies the various data elements and forwards the transaction for processing to the appropriate entity or payment network.

In connection with the particular exemplary embodiments presented herein, certain structural and/or function features and/or elements are described as being incorporated in particular embodiments. These features and/or elements may be selectively implemented via suitable software, hardware, firmware or any combination thereof. It is also to be appreciated that different aspects of the exemplary embodiments may be selectively employed as appropriate to achieve other alternate embodiments suited for desired applications, the other alternate embodiments thereby realizing the respective advantages of the aspects incorporated therein.

Additionally, it is to be appreciated that certain elements described herein as incorporated together may under suitable circumstances be stand-alone elements or otherwise divided. Similarly, a plurality of particular functions described as being carried out by one particular element may be carried out by a plurality of distinct elements acting independently to carry out individual functions, or certain individual functions may be split-up and carried out by a plurality of distinct elements acting in concert. Alternately, some elements or components otherwise described and/or shown herein as distinct from one another may be physically or functionally combined where appropriate.

In short, the present specification has been set forth with reference to exemplary embodiments. Obviously, modifications and alterations will occur to others upon reading and understanding the present specification. It is intended that the inventive subject matter be construed as including all such modifications and alterations insofar as they come within the scope of the appended claims or the equivalents thereof.

## Claims

1. A method of passing authentication result data (40f), such as authentication result data (40f) generated by an issuing bank during Secure 3-D authentication of a cardholder (30) during a transaction between the cardholder (30) and a merchant (10), to an acquirer (60), using a bridge server (70), the authentication result data reflecting a result of an attempt to authenticate the cardholder (30) and contained in an expansion field (56f) of a transaction record (56) also containing a transaction ID (40a) and transaction details (40b-40e) stored in a database (54) maintained in connection with an order management system (52) of the merchant (10), the method comprising:
a) providing, by the bridge server (70), a merchant (10) with a web page (72) over a communications network (20), said web page (72) requesting a transaction ID;
b) receiving, at the bridge server (70), the transaction ID over the communications network from the second party (10);
c) collecting, by the bridge server (70), transaction details using the received transaction ID, from the order management system (52) the transaction details including the authentication result data (40f) and being retrieved from the transaction record (56) stored in the database (54) maintained in connection with the order management system (52);
d) identifying, by the bridge server (70), the cardholder authentication result data (40f) within the collected transaction details;
e) formatting, by the bridge server (70), the transaction details according to a prescribed format; and
f) forwarding, by the bridge server (70), the formatted transaction details to the third party (60),
wherein the bridge server (70) is implemented by a server, connected to the order management system (53) and the acquirer (60) via the Internet .

2. The method of claim 1, wherein the transaction record includes a plurality of fields, each field including a name identifying a type of the field and a value representing an element of the transaction details.

3. The method of claim 2, wherein the transaction record includes a first field having a first name and containing a first value, in which the first value represents the authentication data but the corresponding first name identifies the type of the field as otherwise.

4. The method of claim 3, wherein step d) comprises identifying the authentication data as the value contained in the field having the first name.

5. The method of claim 3, wherein step d) comprises parsing the transaction details to locate a value that has an appearance consistent with authentication data.

## Patentansprüche

1. Verfahren zum Weiterleiten von Authentifizierungsergebnisdaten (40f), wie etwa Authentifizierungsergebnisdaten (40f), die von einer ausstellenden Bank während der Secure 3-D-Authentifizierung eines Karteninhabers (30) während einer Transaktion zwischen dem Karteninhaber (30) und einem Händler (10) erzeugt werden, an einen Beschaffer (60) unter Verwendung eines Brückenservers (70), wobei die Authentifizierungsergebnisdaten ein Ergebnis eines Versuchs, den Karteninhaber (30) zu authentifizieren, widerspiegeln und in einem Erweiterungsfeld (56f) eines Transaktionsdatensatzes (56) enthalten sind, der auch eine Transaktions-ID (40a) und Transaktionsdetails (40b-40e) enthält und in einer Datenbank (54) gespeichert ist, die in Verbindung mit einem Auftragsverwaltungssystem (52) des Händlers (10) gepflegt wird, wobei das Verfahren umfasst:
a) Bereitstellen einer Webseite (72) für einen Händler (10) durch den Brückenserver (70) über ein Kommunikationsnetzwerk (20), wobei die Webseite (72) eine Transaktions-ID anfordert;
b) Empfangen der Transaktions-ID über das Kommunikationsnetzwerk von der zweiten Partei (10) am Brückenserver (70);
c) Sammeln von Transaktionsdetails durch den Brückenserver (70) unter Verwendung der empfangenen Transaktions-ID vom Auftragsverwaltungssystem (52), wobei die Transaktionsdetails die Authentifizierungsergebnisdaten (40f) einschließen und aus dem Transaktionsdatensatz (56) abgerufen werden, der in der Datenbank (54) gespeichert ist, die in Verbindung mit dem Auftragsverwaltungssystem (52) gepflegt wird;
d) Identifizieren der Authentifizierungsergebnisdaten (40f) des Karteninhabers innerhalb der gesammelten Transaktionsdetails durch den Brückenserver (70);
e) Formatieren der Transaktionsdetails gemäß einem vorgeschriebenen Format durch den Brückenserver (70); und
f) Weiterleiten der formatierten Transaktionsdetails an die dritte Partei (60) durch den Brückenserver (70),
wobei der Brückenserver (70) durch einen Server umgesetzt ist, der über das Internet mit dem Auftragsverwaltungssystem (53) und dem Beschaffer (60) verbunden ist.

2. Verfahren nach Anspruch 1, wobei der Transaktionsdatensatz eine Vielzahl von Feldern einschließt, wobei jedes Feld einen Namen, der einen Typ des Feldes identifiziert, und einen Wert, der ein Element der Transaktionsdetails darstellt, einschließt.

3. Verfahren nach Anspruch 2, wobei der Transaktionsdatensatz ein erstes Feld einschließt, das einen ersten Namen hat und einen ersten Wert enthält, wobei der erste Wert die Authentifizierungsdaten darstellt, der entsprechende erste Name den Typ des Feldes jedoch als anders identifiziert.

4. Verfahren nach Anspruch 3, wobei Schritt d) das Identifizieren der Authentifizierungsdaten als den Wert umfasst, der in dem Feld mit dem ersten Namen enthalten ist.

5. Verfahren nach Anspruch 3, wobei Schritt d) das Parsen der Transaktionsdetails umfasst, um einen Wert zu lokalisieren, der ein mit den Authentifizierungsdaten übereinstimmendes Erscheinungsbild aufweist.

## Revendications

1. Procédé de transmission de données de résultat d'authentification (40f), comme des données de résultat d'authentification (40f) générées par une banque émettrice au cours d'une authentification 3-D Secure d'un titulaire de carte (30) au cours d'une transaction entre le titulaire de carte (30) et un commerçant (10), à un acquéreur (60), à l'aide d'un serveur de pont (70), les données de résultat d'authentification reflétant un résultat d'une tentative d'authentification du titulaire de carte (30) et étant contenues dans un champ d'expansion (56f) d'un enregistrement de transaction (56) contenant également un identifiant de transaction (40a) et des détails de transaction (40b-40e) stockés dans une base de données (54) tenue à jour en liaison avec un système de gestion de commande (52) du commerçant (10), le procédé comprenant :
a) la fourniture, par le serveur de pont (70), à un commerçant (10), d'une page Web (72) sur un réseau de communication (20), ladite page Web (72) demandant un identifiant de transaction ;
b) la réception, au niveau du serveur de pont (70), de l'identifiant de transaction sur le réseau de communication depuis le deuxième intervenant (10) ;
c) la collecte, par le serveur de pont (70), de détails de transaction à l'aide de l'identifiant de transaction reçu, à partir du système de gestion de commande (52), les détails de transaction comportant les données de résultat d'authentification (40f) et étant récupérés à partir de l'enregistrement de transaction (56) stocké dans la base de données (54) tenue à jour en liaison avec le système de gestion de commande (52) ;
d) l'identification, par le serveur de pont (70), des données de résultat d'authentification de titulaire de carte (40f), à l'intérieur des détails de transaction collectés ;
e) le formatage, par le serveur de pont (70), des détails de transaction selon un format prescrit ; et
f) le transfert, par le serveur de pont (70), des détails de transaction formatés au troisième intervenant (60), dans lequel le serveur de pont (70) est mis en œuvre par un serveur, relié au système de gestion de commande (53) et à l'acquéreur (60) via l'Internet.

2. Procédé selon la revendication 1, dans lequel l'enregistrement de transaction comporte une pluralité de champs, chaque champ comportant un nom identifiant un type du champ et une valeur représentant un élément des détails de transaction.

3. Procédé selon la revendication 2, dans lequel l'enregistrement de transaction comporte un premier champ ayant un premier nom et contenant une première valeur, dans lequel la première valeur représente les données d'authentification, sinon le premier nom correspondant identifie le type du champ.

4. Procédé selon la revendication 3, dans lequel l'étape d) comprend l'identification des données d'authentification comme la valeur contenue dans le champ ayant le premier nom.

5. Procédé selon la revendication 3, dans lequel l'étape d) comprend l'analyse syntaxique des détails de transaction pour localiser une valeur ayant une apparence cohérente avec des données d'authentification.
